Europäisches Patentamt

(19) European Patent Office

Office européen des brevets

(11) Veröffentlichungsnummer: **0 052 762**
**A1**

(12) **EUROPÄISCHE PATENTANMELDUNG**

(21) Anmeldenummer: **81108628.9**

(22) Anmeldetag: **21.10.81**

(51) Int. Cl.³: **G 01 N 31/22**

(30) Priorität: **26.11.80 DE 3044433**

(43) Veröffentlichungstag der Anmeldung:
**02.06.82 Patentblatt 82/22**

(84) Benannte Vertragsstaaten:
**BE CH DE FR GB IT LI NL SE**

(71) Anmelder: **Merck Patent Gesellschaft mit beschränkter Haftung**
**Frankfurter Strasse 250**
**D-6100 Darmstadt(DE)**

(72) Erfinder: **Bodart, Detlef Eugen, Dr.**
**Karlstrasse 56**
**D-6100 Darmstadt(DE)**

(54) **Verfahren und Mittel zur Bestimmung von Nitrationen.**

(57) Die Erfindung betrifft ein Verfahren zur kolorimetrischen Bestimmung von Nitrationen durch Vermischen der zu untersuchenden Probe mit konzentrierter Schwefelsäure und Zugabe eines die Farbgebung auslösenden Reagenzes, das dadurch gekennzeichnet ist, daß man als Reagenz eine Verbindung der allgemeinen Formel $RO-C_6H_4-C_6H_4-OR$, worin R = H, Alkyl mit 1 bis 6 C-Atomen, zusetzt sowie ein Mittel zur Durchführung des Verfahrens.

EP 0 052 762 A1

Croydon Printing Company Ltd.

Merck Patent Gesellschaft
mit beschränkter Haftung
Darmstadt


Verfahren und Mittel zur Bestimmung von Nitrationen

Die Erfindung betrifft ein Verfahren und Mittel zur kolorimetrischen Bestimmung von Nitrationen in wäßrigen Lösungen.

Nitrat ist ein häufig vorkommendes Anion, für das es relativ wenige Bestimmungsmöglichkeiten gibt. Die einzigen Verfahren von Bedeutung sind kolorimetrischer Art, wobei selbst diese im Vergleich zu denen anderer Iönen wenig befriedigend sind. Aus diesem Grunde wurde in der Vergangenheit oft versucht, Nitrationen zu Nitrit- oder Ammoniumionen zu reduzieren, für die gute Farbreaktionen vorliegen. Dies läßt sich im Rahmen einer kaltkolorimetrischen Schnellmethode jedoch nicht reproduzierbar durchführen.

Alle zur direkten Bestimmung von Nitrationen geeigneten Farbreaktionen benötigen konzentrierte Schwefelsäure als Reaktionsmedium, die nur teilweise durch andere, jedoch

- 4 -

ebenfalls agressive Mineralsäuren ersetzt werden kann.
Unter diesen Bedindungen ist Nitrat in der Lage, bestimmte
in der Säure gelöste organische Verbindungen zu oxidieren
oder zu nitrieren. Beide Reaktionsvarianten sind seit über
hundert Jahren bekannt und gehören somit zu den ältesten,
heute noch angewendeten Nachweismethoden für Nitrationen.

Oxidationsreaktionen z. B. mit Brucin (oranges Produkt)
oder Diphenylamin (blaues Produkt) weisen den Vorteil eines
deutlichen Reaktionskontrasts auf, haben jedoch den Nachteil der geringen Selektivität, da weitere Ionen, z. B.
Chlorid im Seewasser, unter diesen Bedingungen ebenfalls
oxidierend wirken. Nitrierungsreaktionen von Phenolen
führen zu durchweg gelben Nitrophenolen. Der höheren, wenn
auch immer noch für die Praxis kaum ausreichenden, Selektivität stehen hier die gelben Reaktionsfarben entgegen,
deren Intensitätsunterschiede das Auge nur schwer differenzieren kann.

Aus Liebigs Annalen der Chemie 207, 335 (1881) war bereits
bekannt, daß beim Eintragen von 4.4'-Dihydroxydiphenyl
in konzentrierte Schwefelsäure in Gegenwart von Untersalpetersäuredampf eine blaue Färbung hervorgerufen wird. In
Z.anal.Chem. 98, 227 (1934) findet sich der Hinweis, daß
sich hydroxylgruppenhaltige aromatische Substanzen für den
Nitrationennachweis in konzentrierter Schwefelsäure verwenden lassen, daß aber die Empfindlichkeit nicht besonders groß ist. Es ist jedoch bisher nicht gelungen, einen
quantitativen Test zur Bestimmung von Nitrationen auf
dieser Basis zu entwickeln.

Der Erfindung lag deshalb die Aufgabe zugrunde, ein stabiles, empfindliches Reagenz und ein Verfahren zur Bestimmung
von Nitrationen zur Verfügung zu stellen, mit dem geringste
Nitratgehalte sicher und reproduzierbar erfaßt werden können.

Überraschenderweise wurde gefunden, daß 4,4'-Diphenyle mit Nitrationen in Gegenwart konzentrierter Schwefelsäure Farbreaktionen geben, die den gleichzeitigen Anforderungen an Reaktionskontrast und Selektivität gerecht werden.

Gegenstand der Erfindung ist ein Verfahren zur kolorimetrischen Bestimmung von Nitrationen durch Vermischen der zu untersuchenden Probe mit konzentrierter Schwefelsäure und Zugabe eines die Farbgebung auslösenden Reagenzes, das dadurch gekennzeichnet ist, daß man als Reagenz eine Verbindung der allgemeinen Formel $RO-C_6H_4-C_6H_4-OR$, worin $R = H$, Alkyl mit 1 bis 6 C-Atomen, zusetzt.

Ein weiterer Gegenstand der Erfindung ist ein Mittel zur Durchführung dieses Verfahrens, das dadurch gekennzeichnet ist, daß es als Reagenz eine Verbindung der allgemeinen Formel $RO-C_6H_4-C_6H_4-OR$, worin $R = H$, Alkyl mit 1 bis 6 C-Atomen, enthält.

Voraussetzung für die Bildung einer blauen Farbreaktion ist die para-Stellung der RO-Gruppen im Diphenylkern. Der Rest R kann H oder Alkyl wie Methyl, Ethyl, Propyl, i-Propyl, Butyl, i-Butyl, Pentyl, i-Pentyl, Hexyl, i-Hexyl, vorzugsweise Methyl bedeuten, wobei die Alkylgruppen auch durch Reste wie Carboxylgruppen, Estergruppen oder Phenyl substituiert sein können. Eine Substitution im Diphenylkern kann eher reaktionsverschlechternd wirken.

Zur Herstellung des blauen Reaktionsprodukts ist eine genaue Abstimmung der einzelnen Parameter notwendig. Zu geringe Dosierungen des Reagenzes führen zwar zu farblosen Blindwerten, aber in Gegenwart von Nitrationen zu nur kurzfristig stabilen Mischfarben aus einer blauen Verbindung und dem entsprechenden gelben Nitrophenol, die dann in das Gelb des reinen Nitrophenols übergehen. Reproduzierbare Nitratbestimmungen erfordern einen Überschuß an Reagenz, was jedoch einen leicht grünlichen Blindwert zur Folge hat. Die zulässige Obergrenze der Reagenzkonzentration wird dabei durch die Löslichkeit bestimmt. Die geeigneten Reagenzkonzentrationen liegen im Bereich von etwa 0,001 bis 0,2 Gew.-% im Meßansatz. Im Falle von 4.4'-Dimethoxydiphenyl eignet sich eine Konzentration von etwa 0,005 bis 0,08, vorzugsweise 0,04 Gew.-%.

Zur Dosierung des Reagenzes haben sich sowohl Lösungen als auch Pulver, gegebenenfalls in Mischung mit einem festen Träger, als vorteilhaft erwiesen. Geeignete Lösungsmittel sind z. B. die organischen Lösungsmittel Dimethylsulfoxid, Dimethylformamid, Aceton, Dioxan, Ethanol, Tetrahydrofuran, Pyridin, Propylencarbonat, Ethylenglycol-isopropylether, Essigsäure. Als Trägersubstanz für Pulvergemische eignen sich z. B. Alkaliphosphate, wie tri-Natriumphosphat-12-Hydrat.

Die Farbreaktion wird bei einer Schwefelsäurekonzentration von etwa 24 bis 36 N, vorzugsweise von etwa 33 bis 35 N durchgeführt. Höhere Konzentrationen ergeben schwächere Farben, niedrigere Konzentrationen führen zunächst zu schwachen und trüben, jedoch nach etwa einstündiger Standzeit zu tiefblauen beständigen Farben. Im Bereich niedriger Schwefelsäurekonzentrationen nimmt jedoch die Löslichkeit des Diphenyls stark ab, so daß die Trübung fortwährend zunimmt und nach einer Standzeit von einigen Tagen hat sich ein ultramarinblaues Koagulat ausgeschieden. Unterhalb einer Konzentration von etwa 23 N erhält man eine farblose, durch weißes unreagiertes Diphenyl getrübte Lösung. Anstelle der Schwefelsäure kann auch ein Gemisch von Schwefelsäure und Phosphorsäure verwendet werden.

Die Bestimmung von Nitrationen erfolgt in der Weise, daß man die zu untersuchende Probelösung mit Schwefelsäure versetzt und auf Raumtemperatur abkühlt. Anschließend wird das Reagenz hinzugefügt und durchgemischt. Es ist auch möglich, zunächst das Reagenz und anschließend die Schwefelsäure zur Probelösung zu geben. Bereits nach einigen Minuten ist die Reaktion abgelaufen und kann entweder visuell anhand einer Farbskala oder auch photometrisch ausgewertet werden.

Man erhält eine optisch sehr gut differenzierbare Farbabstufung, wenn die Nitrationen in einem Konzentrationsbereich von etwa 0,15 bis 3,5 mg/l in der zu untersuchenden Probelösung vorliegen. Der z. B. bei der Analyse von Wässern aus Industriegegenden interessierende Konzentrationsbereich liegt zwischen 10 und 200 ppm Nitrationen im Wasser. Um eine optimale Farbabstufung zu erreichen, müßte in diesem Fall ein Verhältnis von Wasserprobe zu Schwefelsäure von 1 : 60 eingestellt werden, d. h. ein Meßansatz aus 0,1 ml Wasserprobe und 6,0 ml Schwefelsäure gewährleistet eine optimale Farbabstufung. Zur Einstellung der gewünschten Schwefelsäurekonzentration wird vorteilhafterweise eine geringfügig verdünnte Schwefelsäure (etwa 93 % = 34,7 N) verwendet. Ein empfindlicheres Farb-

- 8 -

system erreicht man dadurch, daß z. B. 6 ml 96 %ige (36 N) Schwefelsäure mit 0,5 ml Wasserprobe kombiniert werden. Hierdurch ergibt sich ein Meßbereich von 2 bis 40 ppm Nitrationen, der dort von Interesse ist, wo besonders nitratarme Wässer, z. B. in der Brauereiwirtschaft, gefordert werden.

Beispiel 1

In einem Reagenzglas werden zu 0,1 ml einer Wasserprobe, die zwischen 10 und 200 ppm Nitrationen enthalten kann, 6 ml konzentrierte Schwefelsäure (Mischung aus 250 ml 96 %iger Schwefelsäure und 15 ml entionisiertem Wasser) hinzugegeben und auf Raumtemperatur abgekühlt. Anschließend werden 6 Tropfen einer 0,4 %igen Lösung von 4.4'-Dimethoxydiphenyl in Propylencarbonat hinzugefügt und gemischt. Nach 3 bis 5 Minuten ist, je nach dem Nitrationengehalt, eine deutliche Farbabstufung von schwachem hellgrün bis tiefblau zu erkennen, die anhand einer Skala mit 8 Farbwerten eindeutig dem entsprechenden Nitrationengehalt zugeordnet werden kann. Analoge Ergebnisse werden erzielt, wenn anstelle von 4.4'-Dimethoxydiphenyl 4.4'-Dipropoxydiphenyl oder auch 4.4'-Dihydroxydiphenyl zugesetzt werden.

Beispiel 2

Zu 0,5 ml einer Wasserprobe, die zwischen 2 und 40 ppm Nitrationen enthalten kann, werden vorsichtig 6 ml 96 %ige Schwefelsäure hinzugegeben. Nach Vermischen und Abkühlen auf etwa 20 °C werden 0,1 mg eines 5 %igen Gemisches von 4.4'-Dimethoxydiphenyl in tri-Natriumphosphat-12-Hydrat durch leichtes Schütteln darin gelöst. Nach 3 bis 5 Minuten ist, je nach dem Nitrationengehalt eine deutliche Farbabstufung von schwachem hellgrün bis tiefblau zu erkennen, die entweder anhand einer Farbskala oder auch spektrophotometrisch ausgewertet werden kann. Zur spektrophotometrischen Auswertung wird die Reaktion in einer Küvette von 10 mm Schichtdicke bei 730 nm im Spektrophotometer gegen eine gleichzeitig zubereitete Blindprobe gemessen. Die Konzentration an Nitrationen wird anhand des gemessenen Extinktionswertes an einer zuvor mit Nitrationen enthaltenden Lösungen genau bekannten Gehaltes erstellten Eichkurve abgelesen.

0 0 5 2 7 6 2

Merck Patent Gesellschaft
mit beschränkter Haftung
Darmstadt


Patentansprüche

1. Verfahren zur kolorimetrischen Bestimmung von Nitrationen durch Vermischen der zu untersuchenden Probe mit konzentrierter Schwefelsäure und Zugabe eines die Farbgebung auslösenden Reagenzes, dadurch gekennzeichnet, daß man als Reagenz eine Verbindung der allgemeinen Formel $RO-C_6H_4-C_6H_4-OR$, worin R = H, Alkyl mit 1 bis 6 C-Atomen, zusetzt.

2. Verfahren nach Anspruch 1, dadurch gekennzeichnet, daß die Schwefelsäure in einer Konzentration von 24 bis 36 N eingesetzt wird.

3. Verfahren nach den Ansprüchen 1 und 2, dadurch gekennzeichnet, daß das Reagenz in Form einer Lösung in einem organischen Lösungsmittel eingesetzt wird.

4. Verfahren nach den Ansprüchen 1 und 2, dadurch gekennzeichnet, daß das Reagenz in Pulverform, gegebenenfalls in Mischung mit einem festen Träger wie Alkaliphosphaten, eingesetzt wird.

5. Verfahren nach den Ansprüchen 1 bis 4, dadurch gekennzeichnet, daß die Probe vor der Zugabe des Reagenzes auf annähernd Raumtemperatur gekühlt wird.

6. Mittel zur Durchführung des Verfahrens nach Anspruch 1, dadurch gekennzeichnet, daß es als Reagenz eine Verbindung der allgemeinen Formel $RO-C_6H_4-C_6H_4-OR$, worin R = H, Alkyl mit 1 bis 6 C-Atomen, enthält.

7. Mittel nach Anspruch 6, dadurch gekennzeichnet, daß das Reagenz in Form einer Lösung in einem organischen Lösungsmittel vorliegt.

8. Mittel nach Anspruch 6, dadurch gekennzeichnet, daß das Reagenz in Pulverform, gegebenenfalls in Mischung mit einem festen Träger wie Alkaliphosphaten, vorliegt.

9. Mittel nach den Ansprüchen 6 bis 8, dadurch gekennzeichnet, daß es im Meßansatz 0,005 bis 0,08 Gew.-% 4.4'-Dimethoxydiphenyl enthält.

10. Verwendung des Mittels nach den Ansprüchen 6 bis 9 in 24 bis 36 N, vorzugsweise 33 bis 35 N Schwefelsäure.

## Europäisches Patentamt
# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 603 856 (BEN-GURION UNIVERSITY OF THE NEGEV)<br><br>* Seite 1 - Seite 6, Zeile 6; Patentansprüche 1,2,11,12, 13,14 und 24 *<br><br>--- | 1,2,4, 8,10 |
| A | CHEMICAL ABSTRACTS, Band 78, Nr. 1, 08. Januar 1973 Zusammenfassung 1676x, Seite 145 COLUMBUS, OHIO (US) & POL'NOHOSPODARSTVO 1972, 18(7), 627-30 S. IVANKO u.a.: "Application of the diphenylamine test for the determination of the nitrate level in plant material" | |
| A | CHEMICAL ABSTRACTS, Band 88, Nr. 13, 27. März 1978 Zusammenfassung 87724c, Seite 373 COLUMBUS, OHIO (US) & MILCHWISSENSCHAFT 1977, 32(12), 705-8 G. MROWETZ u.a.: "Determination of nitrate levels in dried milk products. 2. Rapid determination with diphenylamine and comparison with the cadmium reduction method"<br><br>- - - - - - - - - | |

**KLASSIFIKATION DER ANMELDUNG (Int Cl.³)**

G 01 N 31/22

**RECHERCHIERTE SACHGEBIETE (Int. Cl.³)**

G 01 N
C 12 Q

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-03-1982 | GRIFFITH |

EPA form 1503.1   06.78